# EUROPEAN PATENT SPECIFICATION

(11) **EP 4 225 847 B1**
(45) Date of publication and mention of the grant of the patent: **20.03.2024**
(21) Application number: 21700831.7
(22) Date of filing: 05.01.2021
(51) Int. Cl.: C08L 83/04, C11D 3/00

(54) **FOAM CONTROL COMPOSITION**
SCHAUMREGULIERENDE ZUSAMMENSETZUNG
COMPOSITION DE RÉGULATION DE MOUSSE

(43) Date of publication of application: 16.08.2023
(73) Proprietor: Wacker Chemie AG, 81737 München (DE)
(72) Inventor: YOUNG, John, Saline, Michigan 48176 (US); BUSH, Aaron, Jackson, Michigan 49201 (US); LEVIN, Hagit, Ann Arbor, Michigan 48108 (US); ZHENG, Tianyue, Ann Arbor, Michigan 48105 (US)
(86) International application number: PCT/EP2021/050059
(87) International publication number: WO 2022/148525

(56) References cited:
- US-A1- 2006 160 908
- US-A1- 2015 119 509

## Description

### BACKGROUND

The invention relates to foam control compositions. More particularly, the invention relates to a multi-component foam control composition. The invention also relates a process for preparing a foam control composition and its use.

In aqueous systems that include surfactants such as, for example, detergents the generation of foam is undesirable under certain conditions. Thus, detergents will often include a defoamer. For example, in laundering applications, the use of front load (drum-type) washing machines creates conditions wherein foam is easily generated. Siloxane-based defoamers have proven themselves particularly useful in these applications, e.g. as disclosed in US 2006/160908 A1.
However, such defoamers are typically complex and expensive to manufacture.

Additionally, grey water exiting a washing machine typically includes detergent, oil, and dirt, which is sent to a municipal facility for treatment and purification. Thus, the laundering processes may provide a route for siloxanes to enter the ecosystem. Once in the environment, polydiorganosiloxanes (M-D type materials), such as polydimethylsiloxanes (PDMS), are known to decompose due to the presence of the repeating dimethylsiloxy units, which decompose through a cyclization pathway to lower molecular weight cyclic siloxanes, such as octamethylcyclotetrasiloxane and decamethylcyclopentasiloxane. For example, alpha, omega-silanol terminated siloxane fluids are known to thermally decomposed, forming cyclic siloxanes, and the terminal silanol group is regenerated. Decomposition or depolymerization of polydiorganosiloxanes may also occur by acid or alkaline catalysts, which attack the main chain of the polymer forming cyclic siloxanes and shorten fragments of the polymer.

Therefore, it would be desirable to provide a composition that can overcome the aforementioned deficiencies.

### BRIEF SUMMARY

Embodiments of a foam control composition are provided.

In an embodiment, the foam control composition comprises a component (A) and a component (B). Component (A) comprises units of the formula

(R¹O)ₐ(R²O)_{b}(R³O)_{c}R⁴_{d}R⁵ₑR⁶_{f}SiO[SiR⁷R⁸O]_{X}[SiR⁹(OR¹⁰)O]_{Y}Si(R¹O)ₐ(R²O)_{b}(R³O)_{c}R⁴_{d}R⁵ₑR⁶_{f}

in which
R¹ is a hydrogen atom or a saturated or unsaturated group having 6 to 40 carbon atoms,
R² is a hydrogen atom or a saturated or unsaturated group having 6 to 40 carbon atoms,
R³ is a hydrogen atom or a saturated or unsaturated group having 6 to 40 carbon atoms,
R⁴ is a saturated or unsaturated group having 1 to 12 carbon atoms,
R⁵ is a saturated or unsaturated group having 1 to 12 carbon atoms,
R⁶ is a saturated or unsaturated group having 1 to 12 carbon atoms,
R⁷ is a saturated or unsaturated group having 1 to 12 carbon atoms,
R⁸ is a saturated or unsaturated group having 1 to 12 carbon atoms,
R⁹ is a saturated or unsaturated group having 1 to 12 carbon atoms,
R¹⁰ is a saturated or unsaturated group having 6 to 40 carbon atoms. The subscripts a, b, c, d, e, and f each have values ranging from 0 to 3 subject to the limitation that a + b + c + d + e + f = 3, X is an integer from 0 to 1000, and Y is an integer from 1 to 1000. Component (B) comprises a filler.

In some embodiments, component (A) is a hydrophobic fluid that exhibits a surface tension of from 20-40 millinewtons per meter.

In other embodiments, component (A) has a weight-average molecular weight in a range of from 2,000-50,000 daltons.

In still other embodiments, component (A) comprises [SiR⁷R⁸O]_{X} units in an amount of 0-99 mol%. In certain of these embodiments, component (A) comprises [SiR⁷R⁸O]_{X} units in an amount of 10-99 mol%. Preferably, in some embodiments, component (A) comprises [SiR⁷R⁸O]_{X} units in the amount of 30-80 mol%. However, in other embodiments, component (A) comprises [SiR⁷R⁸O]_{X} units in an amount of 0-5 mol%.

In some embodiments, component (A) comprises [SiR⁹(OR¹⁰)O]_{Y} units in an amount of 99 mol% or less. Preferably, in these embodiments, component (A) comprises [SiR⁹(OR¹⁰)O]_{Y} units in an amount of 90 mol% or less. In some of these embodiments, component (A) comprises SiR⁹(OR¹⁰)O]_{Y} units in the amount of 20-80 mol%. In other of these embodiments, component (A) comprises [SiR⁹(OR¹⁰)O]_{Y} units in an amount of 95-99 mol%.

Preferably, the filler comprises an oxide of silicon, a metal oxide, or a mixture thereof.

In some embodiments, the composition further comprises a component (C). In certain embodiments, component (C) is a resin that comprises M units and Q units, wherein at least one M unit is of a formula (R¹¹)₃SiO_{1/2} and at least one Q unit is of a formula SiO_{4/2}, wherein R¹¹ is a hydrogen atom, a saturated or unsaturated group having 1 to 40 carbon atoms, or a saturated or unsaturated group having 6 to 40 carbon atoms and at least one alkyl single bonded to an oxygen atom.

In certain embodiments, the weight ratio of component (B) to component (C) in the composition is in a range of 95:5 to 5:95.

In other embodiments, the molar ratio of M to Q units is in the range from 0.5 to 2.0.

In still other embodiments, component (C) further comprises units of the formula R¹¹SiO_{3/2} or units of the formula R¹¹₂SiO_{2/2}, wherein the R¹¹SiO_{3/2} units or the R¹¹₂SiO_{2/2} units are present in an amount from 0.01-20 mol % based on the sum of all of the units in component (C).

In some embodiments, the composition further comprises a component (D). In certain embodiments, component (D) includes one or more water-insoluble organic compounds. In certain of these embodiments, at least one of the one or more water-insoluble organic compounds has a boiling point of greater than 100°C at 900-1100 hPa.

In some embodiments, the composition exhibits a viscosity of 10-2,000,000 mPa s at 25° C and 1014.25 hPa and a density of 0.9-1.20 g/mL.

In some embodiments of the composition, Y is from 10 to 1000.

In other embodiments, adjacent carbon atoms of at least one of R¹, R², R³, or R¹⁰ are interrupted by one or more oxygen or nitrogen atoms.

Embodiments of an aqueous detergent are also provided. In an embodiment, the aqueous detergent comprises an embodiment of the foam control composition and a surfactant system. The surfactant system comprises at least one surfactant.

### DETAILED DESCRIPTION

It is to be understood that the invention may assume various alternative orientations and step sequences, except where expressly specified to the contrary. It is also to be understood that the specific materials, articles, and methods described in the following specification are simply exemplary embodiments of the inventive concepts. Hence, specific properties, conditions, or other physical characteristics relating to the embodiments disclosed are not to be considered as limiting, unless expressly stated otherwise.

In certain embodiments, a foam control composition is provided. The composition is suitable for use in controlling an amount of foam in an aqueous system. For example, the composition may be provided as a portion of an aqueous laundry detergent and utilized in laundering applications. However, the foam control composition is not limited to detergent applications and can be utilized in other kinds or types of cleaning compositions. Furthermore, the composition may be utilized in applications other than laundering. For example, the composition may also be suitable to control foam in applications such as, for example, textile, pulp, wastewater, natural gas scrubbing, polymer dispersions, or have agricultural applications or other applications involving aqueous systems.

The foam control composition comprises a component (A). In some embodiments, component (A) is a hydrophobic fluid. Component (A) comprises units of the formula (R¹O)ₐ(R²O)_{b}(R³O)_{c}R⁴_{d}R⁵ₑR⁶_{f}SiO[SiR⁷R⁸O]_{X}[SiR⁹(OR¹⁰)O]_{Y}Si(R¹O)ₐ(R²O)_{b}(R³O)_{c}R⁴_{d}R⁵ₑR⁶_{f} in which
R' is a hydrogen atom or a saturated or unsaturated group having 6 to 40 carbon atoms,
R² is a hydrogen atom or a saturated or unsaturated group having 6 to 40 carbon atoms,
R³ is a hydrogen atom or a saturated or unsaturated group having 6 to 40 carbon atoms,
R⁴ is a saturated or unsaturated group having 1 to 12 carbon atoms,
R⁵ is a saturated or unsaturated group having 1 to 12 carbon atoms,
R⁶ is a saturated or unsaturated group having 1 to 12 carbon atoms,
R⁷ is a saturated or unsaturated group having 1 to 12 carbon atoms,
R⁸ is a saturated or unsaturated group having 1 to 12 carbon atoms,
R⁹ is a saturated or unsaturated group having 1 to 12 carbon atoms,
R¹⁰ is a saturated or unsaturated group having 6 to 40 carbon atoms. The subscripts a, b, c, d, e, and f each have values ranging from 0 to 3 subject to the limitation that a + b + c + d + e + f = 3, X is an integer from 0 to 1000, and Y is an integer from 1 to 1000.

In this embodiment, component (A) is a polyorganyloxysiloxane comprising at least one [SiR⁹(OR¹⁰)O] unit, which may also be referred to herein as a T unit. Advantageously, it has been discovered that when a T unit of component (A) comprises an alkoxy group, the foam control composition can control an amount of foam in, for example, an aqueous system. Additionally, including the T unit(s) described above may prevent the decomposition of component (A) into a cyclic diorganosiloxane.

In embodiments where R¹ is a saturated or unsaturated group having 6 to 40 carbon atoms, adjacent carbon atoms of R¹ may be interrupted by one or more atoms of oxygen (O) or nitrogen (N). In embodiments where R² is a saturated or unsaturated group having 6 to 40 carbon atoms, adjacent carbon atoms of R² may be interrupted by one or more atoms of O or N. In embodiments where R³ is a saturated or unsaturated group having 6 to 40 carbon atoms, adjacent carbon atoms of R³ may be interrupted by one or more atoms of O or N. In embodiments where R¹⁰ is a saturated or unsaturated group having 6 to 40 carbon atoms, adjacent carbon atoms of R¹⁰ may be interrupted by one or more atoms of O or N. When more than one atom of O or N interrupts adjacent carbon atoms of at least one of R¹, R², R³, or R¹⁰, it is preferred that the atoms of O or N are not adjacent to each other.

In some embodiments, the saturated or unsaturated group of R⁴, R⁵, R⁶, R⁷, R⁸, and R⁹ is a hydrocarbon group having 1 to 12 carbon atoms. Such hydrocarbon groups include methyl, ethyl, propyl, isopropyl, butyl, isobutyl, tert-butyl, pentyl, neopentyl, hexyl, cyclohexyl, octyl, nonyl, decyl, dodecyl groups, alkenyl groups such as vinyl, allyl, propenyl, isopropenyl, butenyl, hexenyl, cyclohexenyl, ethynyl and octenyl, and aryl groups such as phenyl, tolyl, xylyl and naphthyl. Methyl and ethyl groups are most preferred. In some embodiments, at least 80 mol% of R⁴, R⁵, and R⁶ are a methyl or ethyl group and at least 50 mol% of R⁷, R⁸, and R⁹ are a methyl or ethyl group.

In some embodiments, component (A) comprises more [SiR⁷R⁸O] units, which may also be referred to herein as D units, than [SiR⁹(OR¹⁰)O] units. In other embodiments, component (A) comprises more [SiR⁹(OR¹⁰)O] units than [SiR⁷R⁸O] units.

As noted above, X is an integer from 0 to 1000. In these embodiments, component (A) may comprise [SiR⁷R⁸O]_{X} units in an amount of 0-99 mol%. In embodiments where X is 0, the mol% of the [SiR⁷R⁸O] units in component (A) may be 5 mol% or less. Preferably, in embodiments where X is 0, the mol% of the [SiR⁷R⁸O] units in component (A) is 0 mol%. In embodiments where X is a positive integer but has a low value such as, for example, 0-50, the mol% of the [SiR⁷R⁸O] units in component (A) may be 0-5 mol%. In other embodiments, X may be 10 to 1000 or, more preferably, 20 to 500. In these embodiments, X may be an integer such that the [SiR⁷R⁸O] units in component (A) are present in an amount of 10-99 mol%. More preferably, in these embodiments, X is an integer such that the [SiR⁷R⁸O] units are present in an amount of 30-80 mol%.

As noted above, Y is an integer from 1 to 1000. In these embodiments, component (A) may comprise [SiR⁹(OR¹⁰)O]_{Y} units in an amount of 99 mol% or less. Preferably, in these embodiments, Y is an integer such that the [SiR⁹(OR¹⁰)O] units are present in an amount greater than 0 mol%. Preferably, Y is an integer such that the [SiR⁹(OR¹⁰)O] units are present in an amount of 5 mol% or more. In one such embodiment, the [SiR⁹(OR¹⁰)O] units are present in an amount of 5-99 mol%. In certain embodiments, Y is 10 or more. For example, Y may be from 10 to 1000. Preferably, Y is an integer such that the [SiR⁹(OR¹⁰)O] units are present in an amount of 20 mol% or more. For example, in an embodiment, Y is an integer such that the [SiR⁹(OR¹⁰)O] units are present in an amount of 95 mol% or more. For example, the [SiR⁹(OR¹⁰)O] units in component (A) may be 95-99 mol%. In this embodiment, X may be 0-50 and the mol% of the [SiR⁷R⁸O] units in component (A) may be 0-5 mol%. However, in some embodiments, Y is an integer such that the [SiR⁹(OR¹⁰)O] units are present in an amount of 90 mol% or less. For example, in some embodiments, component (A) comprises 20-90 mol% [SiR⁹(OR¹⁰)O] units. In other embodiments, component (A) may comprise [SiR⁹(OR¹⁰)O] units in an amount between 0 and 90 mol%. For example, the [SiR⁹(OR¹⁰)O] units may be present in an amount of 5-90 mol%. In these embodiments, Y may be an integer such that component (A) comprises 20-80 mol% of the [SiR⁹(OR¹⁰)O] units.

It should be noted that when describing the mol% of a particular unit of component (A), the mol% described is based on the total number of units in component (A). The mol% of a particular type of unit, e.g. D or T units, is preferably determined based on standard analytical Nuclear Magnetic Spectroscopy ²⁹Si (NMR) techniques. For determining the mol% of component (A), the T units are defined in a range from -40 to -80 ppm within the ²⁹Si (NMR) spectrum and D units are defined in a range from -21 to -40 ppm within the ²⁹Si (NMR) spectrum.

In embodiments in which the mol% of the [SiR⁷R⁸O] units in component (A) is greater than 5 mol%, forming component (A) may include the use of a transition metal catalyst. Transition metal catalysts are useful for dehydrogenative or reductive coupling methods for reacting polyorganohydrosiloxanes with the appropriate alcohols, aldehydes, or ketones to form component (A). The use of a dehydrogenative or reductive pathway enables chemical feedstocks possessing alcohols, aldehydes, or ketones to be used as a method of functionalizing a siloxane polymer. Examples of metals suitable for use in the catalyst include platinum, rhodium, palladium, ruthenium, and iridium, which can optionally be fixed on finely divided support materials, such as active carbon, alumina or silica. Specific examples of homogeneous catalysts suitable for use in forming component (A) include [CuH(PPh₃)]₆, [RuCl₂(*p*-cymene)]₂, RhCl(PPh₃)₃, and tris(pentafluorophenyl)borane.

In embodiments where the mol% of the [SiR⁷R⁸O] units in component (A) is 5 mol% or less, transesterification methods known in the art may be utilized to exchange lower boiling point alcohols with higher boiling point alcohols. In these embodiments, silicone polymers such as polymethylmethoxysiloxane or polymethylethoxysiloxanes may be reacted with one or more of the alcohols to produce functionalized polyalkoxysiloxanes having T units using a Lewis acid catalyst such as Ti(OBu)₄. During this process, any low boiling point methanol or ethanol generated can be removed during synthesis.

Alcohols suitable for use in forming component (A) can be selected from various primary, secondary, or tertiary saturated or unsaturated alcohols. In some embodiments, these alcohols have 6 to 40 carbon atoms. In some of these embodiments, the alcohol may include a pair of carbon atoms interrupted by one or more atoms of O or N. Examples of suitable alcohols include anisyl alcohol, benzyl alcohol, cinnamyl alcohol, carvacrol, citronellol, cis-6-nonen-1-ol, cis-3-octen-ol, cyclohexanol, 1-decanol, 6,8-dimethylnonan-2-ol, dihydrocarveol, 2,6-dimethylheptan-2-ol, ebanol, eugenol, geraniol, 1-heptanol, hydrocinnamyl alcohol, cis-3-hexanol, trans-3-hexanol, cis-4-heptenol, isoborneol, isoeugenol, isomethol, isopulegol, lauryl alcohol, linalool, linoleyl alcohol, menthol, a-methylbenzyl alcohol, nerol, nonyl alcohol, trans-2-nonen-1-ol, trans-2-cis-6-nonadienol, 1-octanol, 3-octanol, trans-2-octenol, oleyl alcohol, b-phenethyl alcohol, 2-phenylethanol, 3-phenylpropanol, 2-phenoxyethanol, stearyl alcohol, a-terpineol, tetrahydrogeraniol, tetrahydrolinalool, thymol and trimethylcyclohexanol. Commercially available materials suitable for use in forming component (A) may have alcohol alkoxylates groups with carbon atoms interrupted by an oxygen atom. Such alcohol alkoxylates are sold under the trademarks Ecosurf^{™} or Tergitol^{™} and are available from Dow Chemical Company or sold under the trademarks Emulan^{®}, Lutensol^{®} or Pluriol^{®} and are available from BASF.

Reductive coupling methods utilized to form component (A) may include using one or more of the following aldehydes: cinnamaldehyde, cis-4-decanal, cyclohexancarboxy-aldehyde, 1-dodecanal, hexadecanal, 2-ethylhexanal, 2-ethyloctanal, hydrocinnamaldehyde, 5-methylfurfural, 2-methylpentenal,1-napthaldehyde, 1-octanal, syringealdehyde, Trivertal, vanillan, o-vanillan ethyl vanillin. Whereas, when utilizing a ketone, suitable ketones include, for example, cyclohexanone, cycloheptanone, 4-methylcyclohexanone, Cyrene^{™}, 2-decanone, 3-decanone, 2-dodecanone, 3-dodecanone 4-(p-hydroxyphenyl)-2-butanone, decalactone, ionone, levoglucosenone, 2-octanone, and 3-octanone.

When formed, component (A) may be a substantially linear. However, component (A) may include branching. The branching structure may be introduced into component (A) using linking agents containing two or more reactive alcohol functional groups such as, for example, diethylene glycol, deionized water, glycerol, 1-phenyl-1,2-ethanediol, 2-phenyl-1,3-propanediol, p-xylene glycol, 1,5-pentanediol, pentaerythritol, polyethylene glycol, polypropylene glycol, polyvinylalcohol,1,8-octanediol, triethylene glycol, as well as two or more reactive aldehyde groups such as, for example, terephthaladlehyde, isophthalaldehyde, benzene-1,3,5-tricarboxyaldehyde, 2,5-bis(octyloxy)terephthaldehyde, and glutaraldehyde. In embodiments where the mol% of [SiR⁷R⁸O] units in component (A) is greater than 5 mol%, the linking agents mentioned above are suitable. In embodiments where the mol% of [SiR⁷R⁸O] units in component (A) is 5 mol% or less, linking agents having alcohol functional groups are preferred.

Preferably, component (A) is a hydrophobic fluid. In some embodiments, it is preferred that component (A) has a surface tension of from 20-40 millinewtons per meter (mN/m), preferably from 25-37 mN/m. The surface tension of component (A) can be measured utilizing a force tensiometer such as a Krüss K100 Force Tensiometer. To measure the surface tension of component (A), the tensiometer is first calibrated by using a calibration weight and should be measured to within +/-0.5 mg of the calibration weight. A deionized water sample is tested as a reference and should be measured to within +/-1.0 mN/m of 72.4 mN/m. Next, the surface tension of component (A) can be measured by filling a 4-ounce sample jar with 37.5 mL of component (A) and placing it on the vessel stage. The sample vessel stage is raised until the sample surface is just below the bottom of a platinum plated probe. The platinum plated probe may be cleaned prior to use with an external heating source. The surface tension measurements are taken at 22°C, using a wetting depth of 5 millimeters (mm), a speed up of 5 mm/min, and a speed down of 5 mm/min. Several measurements may be taken after the first insult, and the average can be calculated once equilibrium is reached to provide the surface tension.

In other embodiments, component (A) has a weight-average molecular weight in a range of from 2,000-50,000 daltons (Da). The number average molecular weight (Mw) of component (A) is preferably in the range of 3,000-30,000 Da. The weight-average molecular weight and the number average molecular weight can be determined by Size Exclusion Chromatography (SEC) utilizing a PLgel MIXED-B column, which has a length of 300 mm and a width of 7.5 mm and is available from Agilent Technologies, Inc., and a tetrahydrofuran (THF) mobile phase using a flow rate of 1 mL/min at 25°C and an injection volume of 100 µL of a 1% solution of component (A) in THF. Moreover, component (A) may exhibit a viscosity in the range of from 1-50,000 mPa, measured under 10 (s-1) shear rate conditions at 25°C by DIN 53019, preferably using a rheometer equipped with a cone and plate having 25 mm diameter. Preferably, under these conditions, component (A) exhibits a viscosity in the range of from 1-20,000 mPa s. More preferably, under these conditions, component (A) exhibits a viscosity in the range of 1-10,000 mPa s. The density of component (A) may be in the range of 0.9-1.20 grams/milliliter (g/mL) at 25°C and measured as described in methods such as, for example, ASTM D333, ISO 2811, or DIN 51757. Unless indicated otherwise, the density of component (A) is measured at 1014.25 hPa and 20°C or at a temperature typically associated with room temperature conditions.

The foam control composition comprises a component (B). Component (B) comprises a filler. Preferably, component (B) is a filler. In some embodiments, the foam control composition comprises filler in an amount of 0.1-20 parts by weight, more preferably 1-10 parts by weight, based in each case on 100 parts by weight of component (A). The filler may be added to component (A) or component (B) in any combination.

The filler may be a single material or a mixture of discrete materials. Preferably, the filler used in the foam control composition includes materials having a BET surface area of 20-1000 m²/g. In certain embodiments, the filler comprises a material that has a particle size of less than 10 µm. In one such embodiment, the filler includes a material having a particle size of 1-10 µm. Suitable filler materials may have an agglomerate size of less than 100 µm.

Suitable filler materials include oxides of silicon such as, for example, silica (SiO₂). Suitable fillers also include metal oxides such as, for example, titanium dioxide and aluminum oxide. Metal soaps, finely ground quartz, PTFE powders, fatty acid amides, e.g. ethylenebisstearamide, and finely divided hydrophobic polyurethanes are also suitable materials that may be utilized as the filler. Mixtures of the above-mentioned materials are also suitable for use as the filler.

Preferred oxides of silicon have a BET surface area of 50 to 800 m²/g. These materials may be fumed or precipitated. Preferred filler materials are pretreated silicas, e.g., commercially available hydrophobic silicas. An example of a commercially available hydrophobic silica that may be suitable for use in the composition is HDK^{®} H2000, which is a fumed silica treated with hexamethyldisilazanes and having a BET surface area of 140 m²/g, available from Wacker Chemie AG. Another example of a commercially available hydrophobic silica that may be suitable for use in the composition is Sipernat^{®} D10, which is a precipitated, polydimethylsiloxane-treated silica having a BET surface area of 90 m²/g, available from Evonik Industries AG.

In some embodiments, the foam control composition comprises a component (C). In one such embodiment, component (C) is present in the foam control composition at 1-10 parts by weight based on 100 parts by weight of component (A). In these amounts, component (C) may be soluble or partially insoluble in component (A). Solubility can be measured by methods known in the art. In other embodiments, the weight ratio of component (B) to component (C) in the composition is in a range of 95:5 to 5:95. In one such embodiment, the weight ratio of component (B) to component (C) in the composition is in a range of 80:20 to 20:80.

In certain embodiment, component (C) is a resin. Preferably, the resin comprises siloxane units of two or more types. In some embodiments, the resin comprises M units and Q units. The molar ratio of M to Q units in the resin may be in the range from 0.5 to 2.0. Preferably, the molar ratio of M to Q units in the resin is in the range from 0.6 to 1.0. The solubility of the resin in component (A) may depend at least in part on the ratio of M to Q units in the resin.

In an embodiment, at least one M unit is of a formula (R¹¹)₃SiO_{1/2} and at least one Q unit is of a formula SiO_{4/2}, wherein R¹¹ is a hydrogen atom, a saturated or unsaturated group having 1 to 40 carbon atoms, or a saturated or unsaturated group having 6 to 40 carbon atoms and at least one alkyl single bonded to an oxygen atom. In other embodiments, the resin comprises units of the formula R¹¹SiO_{3/2} or units of the formula R¹¹₂SiO_{2/2}. When provided, the R¹¹SiO_{3/2} units or the R¹¹₂SiO_{2/2} units are present in the resin in an amount from 0.01-20 mol % based on the sum of all of the units in component (C). Preferably, the R¹¹SiO_{3/2} units or the R¹¹₂SiO_{2/2} units are present in the resin in an amount from 0.01-5 mol % based on the sum of all of the units in component (C). The resin may also comprise up to 10 weight% of free, Si-bonded hydroxyl or alkoxy groups, such as methoxy or ethoxy groups.

In some embodiments, the resin may be a solid. In other embodiments, when measured at a temperature of 25°C and at a pressure of 1014.25 hPa, the resin may exhibit a viscosity of greater than 1000 mPa s measured under 10 (s-1) shear rate conditions using a rheometer equipped with a cone and plate of 25 mm diameter. The weight-average molecular weight determined by SEC (relative to a polystyrene standard) for the resins described above is preferably 200 to 200,000 grams/mol. More preferably, the weight-average molecular weight determined by SEC for the resins described above is 1000-20,000 grams/mol.

In some embodiments, the foam control composition comprises a component (D). Preferably, component (D) is provided in amounts from 0-1000 parts by weight, more preferably, 0-100 parts by weight, based in each case on 100 parts by weight of the total weight of components (A), (B) and, when used, (C). In these embodiments, component (D) might be utilized to provide the foam control composition as a dispersion. Preferably, component (D) comprises water-insoluble organic compounds having a boiling point of greater than 100°C and at a pressure of 900-1100 hPa, in particular 1014.25 hPa. As used herein, the term "water-insoluble" means a solubility in water, at 25°C and under a pressure of 1013.25 hPa, of not more than 2 percent by weight. Suitable water-insoluble organic compounds include mineral oils, natural oils, isoparaffins, polyisobutylenes, residues from the oxo-process alcohol synthesis, esters of low molecular mass synthetic carboxylic acids, such as pentane-1,3-diol diisobutyrate, fatty acid esters, such as octyl stearate, dodecyl palmitate, or isopropyl myristate, fatty alcohols, ethers of low molecular mass alcohols, phthalates, esters of phosphoric acid, and waxes. Polymers of polypropylene glycol with a number average molecular weight of 2000 to 4000, as well as block copolymers based on ethylene oxide and propylene oxide having an average molecular weight of 2700 to 5000 and hydrophillic-lypophillic balance (HLB) of 1 to 7, sold under the trademarks Pluronic^{®} and Tetronic^{®} from BASF may also be employed.

Preferably, when formed, the foam control composition is a viscous mixture of components and when viewed is clear to opaque and colorless to brownish in appearance. In certain embodiments, the foam control composition exhibits a viscosity of 10-2,000,000 mPa s, preferably, 2,000-50,000 mPa s, in each case measured at 25°C and 1014.25 hPa by DIN 53019, preferably using a rheometer equipped with a cone and plate of 25 mm diameter. The foam control composition can be prepared by known methods such as, for example, by mixing of all the desired components. Mixing the components can be accomplished by, for example, producing high shearing forces in colloid mills, dissolvers, or rotor-stator homogenizers. This mixing operation may take place under reduced pressure in order to prevent the incorporation of air which may be present in, for example, the filler.

The embodiments of the foam control composition can be utilized to reduce or prevent foam formation in aqueous systems, particularly foam generated by detergent compositions during laundering. Thus, the composition may be included in an aqueous detergent. Preferably, in these embodiments, the aqueous detergent comprises a surfactant system. The surfactant system comprises at least one surfactant. An anionic surfactants, a non-ionic surfactant, or a mixture thereof is suitable for use in the surfactant system. Surfactants known in the art may be utilized in the aqueous detergent. An example of a suitable anionic surfactant is sodium dodecyl benzene sulphonate. Suitable non-ionic surfactants include alcohol ethoxylates, which ensure effectiveness of detergent at lower washing temperatures, e.g. 40°C. However, other surfactants such as, for example, cationic surfactants, amphoteric surfactants, zwitterionic surfactants, and mixtures thereof may be included as a part of the surfactant system.

When the foam control composition is utilized in a liquid laundry detergent, the relative proportions of the components thereof can be adjusted to match the density of the detergent formulation. To avoid and reduce any chance of coalescence, creaming, sedimentation, or separation, it is preferred that the density of the foam control composition matches the density of the liquid laundry detergent that is provided by the combination of the other components, e.g. the surfactant system, in the detergent. Preferably, in these embodiments, the density of the foam control composition is 1.00-1.10 g/mL as defined in methods such as, for example, ASTM D333, ISO 2811, or DIN 51757. By matching the density of the foam control composition with the density of the liquid laundry detergent the compatibility problems mentioned above may be minimized.

It should be appreciated the foam control composition is not limited to use in a liquid laundry detergent. The foam control can be used in any application where undesired foam is to be minimized or eliminated. For example, in some embodiments, the foam control composition may be provided in a detergent or in another type of cleaning composition that is further formulated into an emulsion, a powder, a dispersion, or another form. Additionally, the foam control composition can be utilized in the other known foam control applications where organosilicon compounds are known to be used.

The foam control composition can be provided in a liquid form such as, for example, an emulsion, a dispersion, or in another form, for example, a powder.

In embodiments where the foam control composition is provided in an emulsified form, emulsifiers known for the preparation of silicone emulsions may be utilized. Suitable examples include anionic, cationic, or nonionic emulsifiers. In some embodiments, it may be desirable to utilize a mixture of emulsifiers. In these embodiments, it is preferred that at least one nonionic emulsifier is utilized. Suitable nonionic emulsifiers include sorbitan fatty acid esters, ethoxylated sorbitan fatty acid esters, ethoxylated fatty acids, ethoxylated linear or branched alcohols having 10 to 20 carbon atoms, and/or glycerol esters. To increase the stability and shelf-life of the resulting emulsion, thickeners maybe employed. Known thickener compounds such as, for example, polyacrylic acid, polyacrylates, cellulose ethers, such as carboxymethylcellulose and hydroxyethylcellulose, natural thickeners, such as xanthan gum, for example, and polyurethanes, and also preservatives and other customary additives can be employed as thickeners. Preferably, in these embodiments, the emulsion includes a continuous phase comprising water.

In embodiments where the foam control composition is provided as a dispersion, components (A), (B), and, when used, (C) may be dispersed in component (D). In this embodiment, component (D) may be a water-insoluble organic compound and form the continuous phase.

In embodiments where the foam control composition is provided as a powder, it may be preferred that the foam control composition include only components (A)-(C) with component (D) being optional. Providing the foam control composition in powder form is accomplished by methods known in the art such as, for example, spray drying or agglomerative granulation, and by utilizing known additives. Thus, as an example, when the foam control composition is in powder form, it preferably comprises 2-20 weight% of the foam control composition with 80 to 98 weight% of the powder comprising one or more additives. Suitable additives may include, for example, zeolites, sodium sulfate, sodium bicarbonate, sodium carbonate, cellulose derivates, urea (derivates) and sugars. These powders may also comprise waxes or organic polymers.

In the embodiments described above, the foam control composition may be used in a method for preventing and/or reducing foam formation in certain media where controlling foam is desired. Such a method may include providing the foam control and introducing the foam control composition into the media. The foam control composition can be introduced into the media in one of the forms, e.g. in a liquid, emulsion, dispersion, or another form, noted above. After introduction, the foam control composition may be mixed with the media to prevent or reduce foam.

### Examples

The following examples are presented solely for the purpose of further illustrating and disclosing the embodiments of the foam control composition. Unless indicated otherwise, all parts and percentages used to describe the examples and preparations thereof relate to weight. Further, unless indicated otherwise, the following examples and preparations thereof were carried out at 1014.25 hPa and at 20°C or at a temperature which comes about when the reactants are combined at 20°C without additional heating or cooling.

Preparation of Example 1 (comparative) 10.0 grams of a polyorganosiloxane having the average formula (CH₃)₃-Si-O-[SiH(CH₃)-O]₄₀-[Si(CH₃)₂-O]₄₀-Si(CH₃)₃ was added to a 100 mL flask containing 0.52 grams of Stryker's Reagent [CuH(PPh₃)₃]₆, which is commercially available from Sigma-Aldrich, USA, dissolved in 20 mL of anhydrous toluene, which is commercially available from Sigma-Aldrich, USA, and 10.0 grams of n-butanol, which is commercially available from Sigma-Aldrich, USA and was added to the mixture of Stryker's Reagent and anhydrous toluene with vigorous stirring. The resulting mixture was heated to 110°C and monitored by FT-IR. No residual Si-H was observed by FTIR after 8 hours of reflux. The mixture was cooled down to room temperature, filtered through Celite^{®}, which is commercially available from Sigma-Aldrich, USA. The solvent was removed using a rotary evaporator to yield 18.0 grams of a product of the formula (CH₃)₃-Si-O-[SiR(CH₃)-O]₄₀-[Si(CH₃)₂-O]₄₀-Si(CH₃)₃, R = butoxy group. The structure of the product was confirmed by ¹H-NMR, ²⁹Si-NMR and FTIR analysis.

### Preparation of Example 2

100.0 grams of a polyorganosiloxane having the average formula (CH₃)₃-Si-O-[SiH(CH₃)-O]₄₀-[Si(CH₃)₂-O]₄₀-Si(CH₃)₃ was added to a 500 mL flask containing 4 grams of palladium on activated carbon (Pd/C), which is commercially available from Sigma-Aldrich, USA, dissolved in 80 mL of anhydrous toluene, which is commercially available from Sigma-Aldrich, USA, and 75.0 grams of cyclohexanol, which is commercially available from Sigma-Aldrich, USA and was added to the mixture of Pd/C and anhydrous toluene with vigorous stirring. The resulting mixture was heated to 100°C and monitored by FT-IR. No residual Si-H was observed by FTIR after 6 hours of reflux. The mixture was cooled down to room temperature, filtered through Celite^{®}, which is commercially available from Sigma-Aldrich, USA. The solvent was removed using a rotary evaporator to yield 160.0 g of a product of the formula (CH₃)₃-Si-O-[SiR(CH₃)-O]₄₀-[Si(CH₃)₂-O]₄₀-Si(CH₃)₃, R = cyclohexoxy group. The structure of the product was confirmed by ¹H-NMR, ²⁹Si-NMR and FTIR analysis.

### Preparation of Example 3

50.0 grams of a polyorganosiloxane having the average formula (CH₃)₃-Si-O-[SiH(CH₃)-O]₄₀-[Si(CH₃)₂-O]₄₀-Si(CH₃)₃ was added to a 500 mL flask containing 2 grams of Stryker's Reagent [CuH(PPh₃)₃]₆, which is commercially available from Sigma-Aldrich, USA, dissolved in 10 mL of anhydrous toluene, which is commercially available from Sigma-Aldrich, USA, and 37.3 grams of cyclohexanone, which is commercially available from Sigma-Aldrich, USA and was added to the mixture of Stryker's Reagent and anhydrous toluene with vigorous stirring. The resulting mixture was heated to 110°C and monitored by FT-IR. No residual Si-H was observed by FTIR after 7 hours of reflux. The mixture was cooled down to room temperature, filtered through Celite^{®}, which is commercially available from Sigma-Aldrich, USA. The solvent was removed using a rotary evaporator to yield 52.4 grams of product, which was a dark grey fluid of the formula (CH₃)₃-Si-O-[SiR(CH₃)-O]₄₀-[Si(CH₃)₂-O]₄₀-Si(CH₃)₃, R = cyclohexoxy group. The structure of the product was confirmed by ¹H-NMR, ²⁹Si-NMR and FTIR analysis.

### Preparation of Example 4

50.0 grams of a polyorganosiloxane having the average formula (CH₃)₃-Si-O-[SiH(CH₃)-O]₄₀-[Si(CH₃)₂-O]₄₀-Si(CH₃)₃ was added to a 500 mL flask containing 2 grams of Stryker's Reagent [CuH(PPh₃)₃]₆, which is commercially available from Sigma-Aldrich, USA, dissolved in 10 mL of anhydrous xylenes, which is commercially available from Sigma-Aldrich, USA, and 37.3 grams of 6,8-dioxabicylo[3.2.1]octanone, which is commercially available under the name Cyrene^{™} from Sigma-Aldrich, USA and was added to the mixture of Stryker's Reagent and anhydrous xylenes with vigorous stirring. The resulting mixture was heated to 110°C and monitored by FT-IR. No residual Si-H was observed by FTIR after 7 hours of reflux. The mixture was cooled down to room temperature, filtered through Celite^{®}, which is commercially available from Sigma-Aldrich, USA. The solvent was removed using a rotary evaporator to yield 52.4 grams of product, which was a thick dark grey fluid of the formula (CH₃)₃-Si-O-[SiR(CH₃)-O]₄₀-[Si(CH₃)₂-O]₄₀-Si(CH₃)₃, R = 6,8-dioxabicylo[3.2.1]octoxy group. The structure of the product was confirmed by ¹H-NMR, ²⁹Si-NMR and FTIR analysis.

### Preparation of Example 5

50.0 grams of a polyorganosiloxane having the average formula (CH₃)₃-Si-O-[SiH(CH₃)-O]₄₀-[Si(CH₃)₂-O]₄₀-Si(CH₃)₃ was added to a 500 mL flask containing 0.65 grams of Stryker's Reagent [CuH(PPh₃)₃]₆, which is commercially available from Sigma-Aldrich, USA, dissolved in 10 mL of anhydrous xylenes, which is commercially available from Sigma-Aldrich, USA, and 59 grams of 1-naphthaldehyde, which is commercially available from Sigma-Aldrich, USA and was added to the mixture of Stryker's Reagent and anhydrous xylenes with vigorous stirring. The resulting mixture was heated to 110°C and monitored by FT-IR. No residual Si-H was observed by FTIR after 3 hours of reflux. The mixture was cooled down to room temperature, filtered through Celite^{®}, which is commercially available from Sigma-Aldrich, USA. The solvent was removed using a rotary evaporator to yield 97.5 grams of product, which was a caramel-colored fluid of the formula (CH₃)₃-Si-O-[SiR(CH₃)-O]₄₀-[Si(CH₃)₂-O]₄₀-Si(CH₃)₃, R = 1-oxynaphthalene group. The structure of the product was confirmed by ¹H-NMR, ²⁹Si-NMR and FTIR analysis.

### Preparation of Example 6

50.0 grams of a polyorganosiloxane having the average formula (CH₃)₃-Si-O-[SiH(CH₃)-O]₄₀-[Si(CH₃)₂-O]₄₀-Si(CH₃)₃ was added to a 500 mL flask containing 0.5 grams of Stryker's Reagent [CuH(PPh₃)₃]₆, which is commercially available from Sigma-Aldrich, USA, dissolved in 10 mL of anhydrous xylenes, which is commercially available from Sigma-Aldrich, USA, and 51.7 grams of 2,4-dimethyl-3-cyclohexenecarboxyaldehyde, which is commercially available under the name Trivertal from Sigma-Aldrich, USA and was added to the mixture of Stryker's Reagent and anhydrous xylenes with vigorous stirring. The resulting mixture was heated to 110°C and monitored by FT-IR. No residual Si-H was observed by FTIR after 3 hours of reflux. The mixture was cooled down to room temperature, filtered through Celite^{®}, which is commercially available from Sigma-Aldrich, USA. The solvent was removed using a rotary evaporator to yield 97.3 grams of product, which was a light brown fluid of the formula (CH₃)₃-Si-O-[SiR(CH₃)-O]₄₀-[Si(CH₃)₂-O]₄₀-Si(CH₃)₃, R = 2,4-dimethyl-3-cyclohexenemethoxy group. The structure of the product was confirmed by ¹H-NMR, ²⁹Si-NMR and FTIR analysis.

### Preparation of Example 7

50.0 grams of a polyorganosiloxane having the average formula (CH₃)₃-Si-O-[SiH(CH₃)-O]₄₀-[Si(CH₃)₂-O]₄₀-Si(CH₃)₃ was added to a 500 mL flask containing 1.5 grams of Stryker's Reagent [CuH(PPh₃)₃]₆, which is commercially available from Sigma-Aldrich, USA, dissolved in 10 mL of anhydrous xylenes, which is commercially available from Sigma-Aldrich, USA, and 42.0 grams of cyclohexanecarboxaldehyde, which is commercially available from Sigma-Aldrich, USA and was added to the mixture of Stryker's Reagent and anhydrous xylenes with vigorous stirring. The resulting mixture was heated to 110°C and monitored by FT-IR. No residual Si-H was observed by FTIR after 3 hours of reflux. The mixture was cooled down to room temperature, filtered through Celite^{®}, which is commercially available from Sigma-Aldrich, USA. The solvent was removed using a rotary evaporator to yield 80.5 grams of product, which was a clear slightly green fluid of the formula (CH₃)₃-Si-O-[SiR(CH₃)-O]₄₀-[Si(CH₃)₂-O]₄₀-Si(CH₃)₃, R = cyclohexanemethoxy group. The structure of the product was confirmed by ¹H-NMR, ²⁹Si-NMR and FTIR analysis.

### Preparation of Example 8

50.0 grams of a polyorganosiloxane having the average formula (CH₃)₃-Si-O-[SiH(CH₃)-O]₄₀-[Si(CH₃)₂-O]₄₀-Si(CH₃)₃ was added to a 500 mL flask containing 1.2 grams of Stryker's Reagent [CuH(PPh₃)₃]₆, which is commercially available from Sigma-Aldrich, USA, dissolved in 10 mL of anhydrous xylenes, which is commercially available from Sigma-Aldrich, USA, and 71.2 grams of 2-methyl-3-(p-isopropylphenyl)proprionalde-hyde, which is commercially available from Sigma-Aldrich, USA and was added to the mixture of Stryker's Reagent and anhydrous xylenes with vigorous stirring. The resulting mixture was heated to 110°C and monitored by FT-IR. No residual Si-H was observed by FTIR after 3 hours of reflux. The mixture was cooled down to room temperature, filtered through Celite^{®}, which is commercially available from Sigma-Aldrich, USA. The solvent was removed using a rotary evaporator to yield 80.5 grams of product, which was a dark opaque fluid of the formula (CH₃)₃-Si-O-[SiR(CH₃)-O]₄₀-[Si(CH₃)₂-O]₄₀-Si(CH₃)₃, R = 3-(p-isopropylphenyl-2-methyl-propoxy group. The structure of the product was confirmed by ¹H-NMR, ²⁹Si-NMR and FTIR analysis.

### Preparation of Example 9

50.0 grams of a polyorganosiloxane having the average formula (CH₃)₃-Si-O-[SiH(CH₃)-O]₄₀-[Si(CH₃)₂-O]₄₀-Si(CH₃)₃ was added to a 500 mL flask containing 1.2 grams of Stryker's Reagent [CuH(PPh₃)₃]₆, which is commercially available from Sigma-Aldrich, USA, dissolved in 10 mL of anhydrous xylenes, which is commercially available from Sigma-Aldrich, USA, and 50.2 grams of 3-phenylpropanal, which is commercially available from Sigma-Aldrich, USA and was added to the mixture of Stryker's Reagent and anhydrous xylenes with vigorous stirring. The resulting mixture was heated to 110°C and monitored by FT-IR. No residual Si-H was observed by FTIR after 3 hours of reflux. The mixture was cooled down to room temperature, filtered through Celite^{®}, which is commercially available from Sigma-Aldrich, USA. The solvent was removed using a rotary evaporator to yield 62.1 grams of product, which was a clear dark green fluid of the formula (CH₃)₃-Si-O-[SiR(CH₃)-O]₄₀-[Si(CH₃)₂-O]₄₀-Si(CH₃)₃, R = 3-phenylpropoxy group. The structure of the product was confirmed by ¹H-NMR, ²⁹Si-NMR and FTIR analysis.

### Examples 1-9

Examples 2-9 which are described below and shown TABLE 1, illustrate certain embodiments of the foam control composition. Example 1 is comparative.

To prepare the foam control compositions of Examples 1-9, 87.0 parts of each product of the Preparation of Examples 1-9 was mixed in a dissolver at room temperature for 10 minutes with 3.0 parts of a component (B), 5.0 parts of a component (C), and 5.0 parts of a component (D). Each of components (B)-(D) was as described below. Component B is a hydrophobic polydimethylsiloxane-treated silica having a BET surface area of 90 m2/g. Component (C) is a silicone resin solid at room temperature that was shown by ²⁹Si-NMR and IR analysis to consist of 40 mol % of CH₃SiO_{1/2} units, 50 mol % of SiO_{4/2} units, 8 mol % of C₂H₅OSiO_{3/2} units, and 2 mol % of HOSiO_{3/2} units and have a weight-average molar mass of 7900 grams/mol (relative to the polystyrene standards ranging from 296 grams/mol to 3,150,000 grams/mol). Component (D) is a hydrocarbon mixture having a boiling range in the range of 235-270°C.

**TABLE 1**

| Examples | Component (A) | Component (B) | Component (C) | Component (D) |
|---|---|---|---|---|
| Example 1 | 87.0 parts of Preparation of Example 1 | 3.0 parts | 5.0 parts | 5.0 parts |
| Example 2 | 87.0 parts of Preparation of Example 2 | 3.0 parts | 5.0 parts | 5.0 parts |
| Example 3 | 87.0 parts of Preparation of Example 3 | 3.0 parts | 5.0 parts | 5.0 parts |
| Example 4 | 87.0 parts of Preparation of Example 4 | 3.0 parts | 5.0 parts | 5.0 parts |
| Example 5 | 87.0 parts of Preparation of Example 5 | 3.0 parts | 5.0 parts | 5.0 parts |
| Example 6 | 87.0 parts of Preparation of Example 6 | 3.0 parts | 5.0 parts | 5.0 parts |
| Example 7 | 87.0 parts of Preparation of Example 7 | 3.0 parts | 5.0 parts | 5.0 parts |
| Example 8 | 87.0 parts of Preparation of Example 8 | 3.0 parts | 5.0 parts | 5.0 parts |
| Example 9 | 87.0 parts of Preparation of Example 9 | 3.0 parts | 5.0 parts | 5.0 parts |

The foam control performance of Examples 1-9 versus a comparative example, Comparative Example 1, is reported in TABLE 2. The foam control performance of each of Examples 1-9 was measured using a rotating cylinder test as described below.

Each rotating cylinder test included adding 0.0025 parts of the respective foam control composition of Examples 1-9 to 100 parts of a commercially available liquid detergent which included both a non-ionic surfactant and an anionic surfactant. Then 1.8 parts of the detergent solution containing the respective antifoam compositions of Examples 1-9 were added to 300 parts of water. The resulting mixture was then added to a cylinder for testing. Before each rotating cylinder test was performed, the cylinder was sealed. After sealing the cylinder, the cylinder was rotated for 12 minutes at 30 rpm. Comparative Example 1 was conducted using the rotating cylinder test described above. However, for Comparative Example 1, the cylinder did not contain any of the materials of Examples 1-9. After rotating the cylinder as described above, the foam height was immediately measured for Examples 1-9 and Comparative Example 1 and the foam height was recorded in mm.

**TABLE 2**

| Examples | Foam Height |
|---|---|
| Comparative Example 1 | 300 |
| Example 1 | 300 |
| Example 2 | 160 |
| Example 3 | 160 |
| Example 4 | 170 |
| Example 5 | 220 |
| Example 6 | 120 |
| Example 7 | 120 |
| Example 8 | 110 |
| Example 9 | 110 |

The lower the foam height reported in TABLE 2, the better the foam control performance. As illustrated in TABLE 2, none of the foam control compositions of Examples 1-9 increased the height of the foam produced after conducting the rotating cylinder test versus Comparative Example 1. In fact, the foam control compositions of Examples 2-9 showed a decrease in the height of the foam produced versus Comparative Example 1 and each of these examples exhibited good to very good foam control.

### Preparation of Example 10

75.0 grams of a methoxyfunctional methyl polysiloxane (SILRES^{®} MSE 100 available from Wacker Chemie AG) and 95.9 grams of 2-phenyl-1-ethanol, which is commercially available from Sigma-Aldrich, USA are added to a flask and heated to 185°C. 0.60 grams Ti(OBu)₄, which is commercially available from Sigma-Aldrich, USA was added under N₂ to the flask. The mixture was heated for 3 hours at 180°C until no further methanol was collected. The mixture was cooled down to room temperature and additional volatiles were removed using a rotary evaporator to yield 148.0 grams of product, which was a light amber colored fluid that included material of the formula (RO)₃Si-[MeSiO(OR)]_{Y}-Si(OR)₃, R = C₆H₅(CH₂)₂. The structure of the product was confirmed by ¹H-NMR, ²⁹Si-NMR and FTIR analysis.

### Preparation of Example 11

60.0 grams of a methoxyfunctional methyl polysiloxane (SILRES^{®} MSE 100 available from Wacker Chemie AG) and 74.8 grams of 2-phenyl-1-ethanol, which is commercially available from Sigma-Aldrich, USA are added to a flask and heated to 180°C. 0.23 grams Ti(OBu)₄, which is commercially available from Sigma-Aldrich, USA was added under N₂ to the flask. The mixture was heated for 3 hours at 180°C until no further methanol was collected. 0.24 grams of water was then added to the flask and the reaction was refluxed for another 3 hours until no additional methanol was collected. The mixture was cooled down to room temperature and additional volatiles were removed using a rotary evaporator to yield 115.0 grams of product, which was a light amber colored fluid that included material of the formula (RO)₃Si-[MeSiO(OR)]_{Y} -Si(OR)₃, R = C₆H₅(CH₂)₂. The structure of the product was confirmed by ¹H-NMR, ²⁹Si-NMR and FTIR analysis.

### Preparation of Example 12

54.3 grams of a methoxyfunctional methyl polysiloxane (SILRES^{®} MSE 100 available from Wacker Chemie AG) and 73.5 grams of 3-phenyl-1-propanol, which is commercially available from Sigma-Aldrich, USA are added to a flask and heated to 180°C. 0.21 grams Ti(OBu)₄, which is commercially available from Sigma-Aldrich, USA was added under N₂ to the flask. The mixture was heated for 3 hours at 180°C until no further methanol was collected. 0.23 grams of water was then added to the flask and the reaction was refluxed for another 3 hours until no additional methanol was collected. The mixture was cooled down to room temperature and additional volatiles were removed using a rotary evaporator to yield 110.0 grams of product, which was a light amber colored fluid that included material of the formula (RO)₃Si-[MeSiO(OR)]_{Y} -Si(OR)₃, R = C₆H₅(CH₂)₃. The structure of the product was confirmed by ¹H-NMR, ²⁹Si-NMR and FTIR analysis.

### Preparation of Example 13

50.7 grams of a methoxyfunctional methyl polysiloxane (SILRES^{®} MSE 100 available from Wacker Chemie AG) and 57.5 grams of cyclohexanemethanol, which is commercially available from Sigma-Aldrich, USA are added to a flask and heated to 180°C. 0.18 grams Ti(OBu)₄, which is commercially available from Sigma-Aldrich, USA was added under N₂ to the flask. The mixture was heated for 3 hours at 180°C until no further methanol was collected. 0.20 grams of water was then added to the flask and the reaction was refluxed for another 3 hours until no additional methanol was collected. The mixture was cooled down to room temperature and additional volatiles were removed using a rotary evaporator to yield 90 grams of product, which was a light amber colored fluid that included material of the formula (RO)₃Si-[MeSiO(OR)]_{Y} -Si(OR)₃, R = C₆H₁₁CH₂). The structure of the product was confirmed by ¹H-NMR, ²⁹Si-NMR and FTIR analysis.

### Preparation of Example 14

34.7 grams of a methoxyfunctional methyl polysiloxane (SILRES^{®} MSE 100 available from Wacker Chemie AG) and 53.5 grams of geraniol, which is commercially available from Sigma-Aldrich, USA are added to a flask and heated to 180°C. 0.18 grams Ti(OBu)₄, which is commercially available from Sigma-Aldrich, USA was added under N₂ to the flask. The mixture was heated for 3 hours at 180°C until no further methanol was collected. 0.14 grams of water was then added to the flask and the reaction was refluxed for another 3 hours until no additional methanol was collected. The mixture was cooled down to room temperature and additional volatiles were removed using a rotary evaporator to yield 75.0 grams of product, which was a light amber colored fluid that included material of the formula (RO)₃Si-[MeSiO(OR)]_{Y} -Si(OR)₃, R = C₁₀H₁₇) The structure of the product was confirmed by ¹H-NMR, ²⁹Si-NMR and FTIR analysis.

### Preparation of Example 15

40.8 grams of a methoxyfunctional methyl polysiloxane (SILRES^{®} MSE 100 available from Wacker Chemie AG) and 50.8 grams of 1-phenyl-1-ethanol, which is commercially available from Sigma-Aldrich, USA are added to a flask and heated to 180°C. 0.26 grams Ti(OBu)₄, which is commercially available from Sigma-Aldrich, USA was added under N₂ to the flask. The mixture was heated for 3 hours at 180°C until no further methanol was collected. 0.16 grams of water was then added to the flask and the reaction was refluxed for another 3 hours until no additional methanol was collected. The mixture was cooled down to room temperature and additional volatiles were removed using a rotary evaporator to yield 77.0 grams of product, which was a light amber colored fluid that included material of the formula (RO)₃Si-[MeSiO(OR)]_{Y}-Si(OR)₃ R = CH₃(C₆H₅)CH). The structure of the product was confirmed by ¹H-NMR, ²⁹Si-NMR and FTIR analysis.

### Preparation of Example 16

36.5 grams of a methoxyfunctional methyl polysiloxane (SILRES^{®} MSE 100 available from Wacker Chemie AG) and 49.5 grams of 2-phenyl-1-propanol, which is commercially available from Sigma-Aldrich, USA are added to a flask and heated to 180°C. 0.16 grams Ti(OBu)₄, which is commercially available from Sigma-Aldrich, USA was added under N₂ to the flask. The mixture was heated for 3 hours at 180°C until no further methanol was collected. 0.15 grams of water was then added to the flask and the reaction was refluxed for another 3 hours until no additional methanol was collected. The mixture was cooled down to room temperature and additional volatiles were removed using a rotary evaporator to yield 72.0 grams of product, which was a light amber colored fluid that included material of the formula (RO)₃Si-[MeSiO(OR)]_{Y} -Si(OR)₃, R = CH₃(C₆H₅)CHCH₂). The structure of the product was confirmed by ¹H-NMR, ²⁹Si-NMR and FTIR analysis.

### Examples 10-16, 10a, 11a, and 14a

Examples 10-16, 10a, 11a, and 14a, , which are described below and shown TABLE 3, illustrate certain embodiments of the foam control composition.

To prepare the foam control compositions of Examples 10-16, 87.0 parts of each product of the Preparation of Examples 10-16 was mixed in a dissolver at room temperature for 10 minutes with 3.0 parts of a component (B), 5.0 parts of a component (C), and 5.0 parts of a component (D). Each of components (B)-(D) was as described below. Component B is a hydrophobic polydimethylsiloxane-treated silica having a BET surface area of 90 m²/gram. Component (C) is a silicone resin solid at room temperature that was shown by ²⁹Si-NMR and IR analysis to consist of 40 mol % of CH₃SiO_{1/2} units, 50 mol % of SiO_{4/2} units, 8 mol % of C₂H₅OSiO_{3/2} units, and 2 mol % of HOSiO_{3/2} units and have a weight-average molar mass of 7900 grams/mol (relative to the polystyrene standards ranging from 296 grams/mol to 3,150,000 grams/mol). Component (D) is a hydrocarbon mixture having a boiling range in the range of 235-270°C.

To prepare the foam control compositions of Examples 10a, 11a, and 14a, 97.0 parts of the products of the Preparation of Examples 10, 11, and 14 were mixed in a dissolver at room temperature for 10 minutes with 3.0 parts of a component (B). Component B was as described above.

**TABLE 3**

| Examples | Component (A) | Component (B) | Component (C) | Component (D) |
|---|---|---|---|---|
| Example 10 | 87.0 parts of Preparation of Example 10 | 3.0 parts | 5.0 parts | 5.0 parts |
| Example 10a | 97.0 parts of Preparation of Example 10 | 3.0 parts | - | - |
| Example 11 | 87.0 parts of Preparation of Example 11 | 3.0 parts | 5.0 parts | 5.0 parts |
| Example 11a | 97.0 parts of Preparation of Example 11 | 3.0 parts | - | - |
| Example 12 | 87.0 parts of Preparation of Example 12 | 3.0 parts | 5.0 parts | 5.0 parts |
| Example 13 | 87.0 parts of Preparation of Example 13 | 3.0 parts | 5.0 parts | 5.0 parts |
| Example 14 | 87.0 parts of Preparation of Example 14 | 3.0 parts | 5.0 parts | 5.0 parts |
| Example 14a | 97.0 parts of Preparation of Example 14 | 3.0 parts | - | - |
| Example 15 | 87.0 parts of Preparation of Example 15 | 3.0 parts | 5.0 parts | 5.0 parts |
| Example 16 | 87.0 parts of Preparation of Example 16 | 3.0 parts | 5.0 parts | 5.0 parts |

The foam control performance of Examples 10-16, 10a, 11a, and 14a versus a comparative example, Comparative Example 2, is reported in TABLE 4. The foam control performance of each of Examples 10-16, 10a, 11a, and 14a was measured using a rotating cylinder test as described below.

Each rotating cylinder test included adding 0.0025 parts of the respective foam control composition of Examples 10-16, 10a, 11a, and 14a to 100 parts of a commercially available liquid detergent (0.025wt%) which included both a non-ionic surfactant and an anionic surfactant. Then 1.8 parts of the detergent solution containing the respective antifoam compositions of Examples 10-16, 10a, 11a, and 14a were added to 300 parts of water. The resulting mixture was then added to a cylinder for testing. Before each rotating cylinder test was performed, the cylinder was sealed. After sealing the cylinder, the cylinder was rotated for 12 minutes at 30 rpm. Comparative Example 2 was conducted using the rotating cylinder test described above. However, for Comparative Example 2, the cylinder did not contain any of the materials of Examples 10-16. After rotating the cylinder as described above, the foam height was immediately measured for Examples 10-16, 10a, 11a, 14a, and Comparative Example 2 and the foam height was recorded in mm.

**TABLE 4**

| Examples | Foam Height |
|---|---|
| Comparative Example 2 | 300 |
| Example 10 | 240 |
| Example 10a | 220 |
| Example 11 | 180 |
| Example 11a | 190 |
| Example 12 | 160 |
| Example 13 | 220 |
| Example 14 | 170 |
| Example 14a | 180 |
| Example 15 | 220 |
| Example 16 | 160 |

The lower the foam height reported in TABLE 4, the better the foam control performance. As illustrated in TABLE 4, none of the foam control compositions of Examples 10-16, 10a, 11a, and 14a increased the height of the foam produced after conducting the rotating cylinder test versus Comparative Example 2. In fact, all of the foam control compositions of Examples 10-16, 10a, 11a, and 14a showed a decrease in the height of the foam produced versus Comparative Example 2 and each of these examples exhibited good to very good foam control.

From the foregoing detailed description, it will be apparent that various modifications, additions, and other alternative embodiments are possible without departing from the true scope of the invention.

The embodiments discussed herein were chosen and described to provide the best illustration of the principles of the invention and its practical application to thereby enable one of ordinary skill in the art to use the invention in various embodiments and with various modifications as are suited to the particular use contemplated. As should be appreciated, all such modifications and variations are within the scope of the invention.

## Claims

1. A foam control composition, comprising:
a component (A) comprising units of the formula (R¹O)ₐ(R²O)_{b}(R³O)_{c}R⁴_{d}R⁵ₑR⁶_{f}SiO[SiR⁷R⁸O]_{X}[SiR⁹(OR¹⁰)O]_{Y}Si(R¹O)ₐ(R²O)_{b}(R³O)_{c}R⁴_{d}R⁵ₑR⁶_{f} in which
R¹ is a hydrogen atom or a saturated or unsaturated group having 6 to 40 carbon atoms,
R² is a hydrogen atom or a saturated or unsaturated group having 6 to 40 carbon atoms,
R³ is a hydrogen atom or a saturated or unsaturated group having 6 to 40 carbon atoms,
R⁴ is a saturated or unsaturated group having 1 to 12 carbon atoms,
R⁵ is a saturated or unsaturated group having 1 to 12 carbon atoms,
R⁶ is a saturated or unsaturated group having 1 to 12 carbon atoms,
R⁷ is a saturated or unsaturated group having 1 to 12 carbon atoms,
R⁸ is a saturated or unsaturated group having 1 to 12 carbon atoms,
R⁹ is a saturated or unsaturated group having 1 to 12 carbon atoms,
R¹⁰ is a saturated or unsaturated group having 6 to 40 carbon atoms,
wherein the subscripts a, b, c, d, e, and f each have values ranging from 0 to 3 subject to the limitation that a + b + c + d + e + f = 3, X is an integer from 0 to 1000, and Y is an integer from 1 to 1000; and
a component (B) comprising a filler.

2. The composition of claim 1, further comprising a component (C), component (C) being a resin that comprises M units and Q units, wherein at least one M unit is of a formula (R¹¹)₃SiO_{1/2} and at least one Q unit is of a formula SiO_{4/2}, wherein R¹¹ is a hydrogen atom, a saturated or unsaturated group having 1 to 40 carbon atoms, or a saturated or unsaturated group having 6 to 40 carbon atoms and at least one alkyl single bonded to an oxygen atom.

3. The composition of claim 1, further comprising a component (D) including one or more
water-insoluble organic compounds.

4. The composition of claim 1, wherein the composition exhibits a viscosity of 10-2,000,000 mPa·s at 25° C and 1014.25 hPa and a density of 0.9-1.20 g/mL, measured according to the methods disclosed in the description.

5. The composition of claim 1, wherein the filler comprises an oxide of silicon, a metal oxide, or a mixture thereof.

6. The composition of claim 1, wherein component (A) is a hydrophobic fluid that exhibits a surface tension of from 20-40 millinewtons per meter, measured according to the method disclosed in the description.

7. The composition of claim 1, wherein component (A) has a weight-average molecular weight in a range of from 2,000-50,000 daltons, measured according to the method disclosed in the description.

8. The composition of claim 1, wherein component (A) comprises [SiR⁷R⁸O]_{X} units in an amount of 0-99 mol%.

9. The composition of claim 1, wherein component (A) comprises [SiR⁹(OR¹⁰)O]_{Y} units in an amount of 99 mol% or less.

10. The composition of claim 1, wherein Y is from 10 to 1000.

11. The composition of claim 1, wherein adjacent carbon atoms of at least one of R¹, R², R³, or R¹⁰ are interrupted by one or more oxygen or nitrogen atoms.

12. The composition of claim 2, wherein the weight ratio of component (B) to component (C) in the composition is in a range of 95:5 to 5:95.

13. The composition of claim 2, wherein the molar ratio of M to Q units here is preferably in the range from 0.5 to 2.0.

14. The composition of claim 2, wherein component (C) further comprises units of the formula R¹¹SiO_{3/2} or units of the formula R¹¹₂SiO_{2/2}, wherein the R¹¹SiO_{3/2} units or the R¹¹₂SiO_{2/2} units are present in an amount from 0.01-20 mol % based on the sum of all of the units in component (C).

15. The composition of claim 3, wherein at least one of the one or more water-insoluble organic compounds has a boiling point of greater than 100°C at 900-1100 hPa.

16. The composition of claim 8, wherein component (A) comprises [SiR⁷R⁸O]_{X} units in an amount of 10-99 mol%.

17. The composition of claim 8, wherein component (A) comprises [SiR⁷R⁸O]_{X} units in an amount of 0-5 mol%.

18. The composition of claim 16, wherein component (A) comprises [SiR⁷R⁸O]_{X} units in the amount of 30-80 mol%.

19. The composition of claim 9, wherein component (A) comprises [SiR⁹(OR¹⁰)O]_{Y} units in an amount of 90 mol% or less.

20. The composition of claim 9, wherein component (A) comprises [SiR⁹(OR¹⁰)O]_{Y} units in an amount of 95-99 mol%.

21. The composition of claim 19, wherein component (A) comprises SiR⁹(OR¹⁰)O]_{Y} units in the amount of 20-80 mol%.

22. An aqueous detergent comprising:
a composition of claim 1; and
a surfactant system, wherein the surfactant system includes at least one surfactant.

## Patentansprüche

1. Schaumregulierungszusammensetzung umfassend:
eine Komponente (A) umfassend Einheiten der Formel (R¹O)ₐ(R²O)_{b}(R³O)_{c}R⁴_{d}R⁵ₑR⁶_{f}SiO[SiR⁷R⁸O]ₓ[SiR⁹(OR¹⁰)O]_{Y}Si(R¹O)ₐ (R²O)_{b}(R³O)_{c}R⁴_{d}R⁵ₑR⁶_{f}
wobei
R¹ ein Wasserstoffatom oder eine gesättigte oder ungesättigte Gruppe mit 6 bis 40 Kohlenstoffatomen ist,
R² ein Wasserstoffatom oder eine gesättigte oder ungesättigte Gruppe mit 6 bis 40 Kohlenstoffatomen ist,
R³ ein Wasserstoffatom oder eine gesättigte oder ungesättigte Gruppe mit 6 bis 40 Kohlenstoffatomen ist,
R⁴ eine gesättigte oder ungesättigte Gruppe mit 1 bis 12 Kohlenstoffatomen ist,
R⁵ eine gesättigte oder ungesättigte Gruppe mit 1 bis 12 Kohlenstoffatomen ist,
R⁶ eine gesättigte oder ungesättigte Gruppe mit 1 bis 12 Kohlenstoffatomen ist,
R⁷ eine gesättigte oder ungesättigte Gruppe mit 1 bis 12 Kohlenstoffatomen ist,
R⁸ eine gesättigte oder ungesättigte Gruppe mit 1 bis 12 Kohlenstoffatomen ist,
R⁹ eine gesättigte oder ungesättigte Gruppe mit 1 bis 12 Kohlenstoffatomen ist,
R¹⁰ eine gesättigte oder ungesättigte Gruppe mit 6 bis 40 Kohlenstoffatomen ist,
wobei die Indizes a, b, c, d, e und f jeweils Werte in dem Bereich von 0 bis 3 aufweisen, mit der Maßgabe der Beschränkung, dass a + b + c + d + e + f = 3, X eine ganze Zahl von 0 bis 1000 ist und Y eine ganze Zahl von 0 bis 1000 ist; und
eine Komponente (B) umfassend einen Füllstoff.

2. Zusammensetzung gemäß Anspruch 1, ferner umfassend eine Komponente (C), wobei Komponente (C) ein Harz ist, das M-Einheiten und Q-Einheiten umfasst, wobei wenigstens eine M-Einheit von einer Formel (R¹¹)₃SiO_{1/2} ist und wenigstens eine Q-Einheit von einer Formel SiO_{4/2} ist, wobei R¹¹ ein Wasserstoffatom, eine gesättigte oder ungesättigte Gruppe mit 1 bis 40 Kohlenstoffatomen oder eine gesättigte oder ungesättigte Gruppe mit 6 bis 40 Kohlenstoffatomen und wenigstens einem Alkyl mit einer Einfachbindung an ein Sauerstoffatom ist.

3. Zusammensetzung gemäß Anspruch 1, ferner umfassend eine Komponente (D), die eine oder mehrere wasserunlösliche organische Verbindungen enthält.

4. Zusammensetzung gemäß Anspruch 1, wobei die Zusammensetzung eine Viskosität von 10-2.000.000 mPa.s bei 25 °C und 1014,25 hPa und eine Dichte von 0,9-1,20 g/ml, gemessen gemäß den in der Beschreibung offenbarten Verfahren, aufweist.

5. Zusammensetzung gemäß Anspruch 1, wobei der Füllstoff ein Oxid von Silicium, ein Metalloxid oder ein Gemisch davon umfasst.

6. Zusammensetzung gemäß Anspruch 1, wobei Komponente (A) ein hydrophobes Fluid ist, das eine Oberflächenspannung von 20-40 Millinewton pro Meter, gemessen gemäß dem in der Beschreibung offenbarten Verfahren, aufweist.

7. Zusammensetzung gemäß Anspruch 1, wobei Komponente (A) ein gewichtsgemitteltes Molekulargewicht in einem Bereich von 2.000-50.000 Dalton, gemessen gemäß dem in der Beschreibung offenbarten Verfahren, aufweist.

8. Zusammensetzung gemäß Anspruch 1, wobei Komponente (A) [SiR⁷R⁸O]_{X}-Einheiten in einer Menge von 0-99 mol-% umfasst.

9. Zusammensetzung gemäß Anspruch 1, wobei Komponente (A) [SiR⁹(OR¹⁰)O]_{Y}-Einheiten in einer Menge von 99 mol-% oder weniger umfasst.

10. Zusammensetzung gemäß Anspruch 1, wobei Y von 10 bis 1000 beträgt.

11. Zusammensetzung gemäß Anspruch 1, wobei benachbarte Kohlenstoffatome von wenigstens einem von R¹, R², R³ und R¹⁰ von einem oder mehreren Sauerstoff- oder Stickstoffatomen unterbrochen sind.

12. Zusammensetzung gemäß Anspruch 2, wobei das Gewichtsverhältnis von Komponente (B) zu Komponente (C) in der Zusammensetzung in einem Bereich von 95:5 bis 5:95 liegt.

13. Zusammensetzung gemäß Anspruch 2, wobei das Molverhältnis von M- zu Q-Einheiten darin vorzugsweise in dem Bereich von 0,5 bis 2,0 liegt.

14. Zusammensetzung gemäß Anspruch 2, wobei Komponente (C) ferner Einheiten der Formel R²¹SiO_{3/2} oder Einheiten der Formel R¹¹₂SiO_{2/2} umfasst, wobei die R²¹SiO_{3/2}-Einheiten oder die R¹¹₂SiO_{2/2}-Einheiten in einer Menge von 0,01-20 mol-%, bezogen auf die Summe aller Einheiten in Komponente (C), vorhanden sind.

15. Zusammensetzung gemäß Anspruch 3, wobei wenigstens eine der einen oder mehreren wasserunlöslichen organischen Verbindungen einen Siedepunkt von höher als 100 °C bei 900-1100 hPa aufweist.

16. Zusammensetzung gemäß Anspruch 8, wobei Komponente (A) [SiR⁷R⁸O]_{X}-Einheiten in einer Menge von 10-99 mol-% umfasst.

17. Zusammensetzung gemäß Anspruch 8, wobei Komponente (A) [SiR⁷R⁸O]_{X}-Einheiten in einer Menge von 0-5 mol-% umfasst.

18. Zusammensetzung gemäß Anspruch 16, wobei Komponente (A) [SiR⁷R⁸O]_{X}-Einheiten in einer Menge von 30-80 mol-% umfasst.

19. Zusammensetzung gemäß Anspruch 9, wobei Komponente (A) [SiR⁹(OR¹⁰)O]_{Y}-Einheiten in einer Menge von 90 mol-% oder weniger umfasst.

20. Zusammensetzung gemäß Anspruch 9, wobei Komponente (A) [SiR⁹(OR¹⁰)O]_{X}-Einheiten in einer Menge von 95-99 mol-% umfasst.

21. Zusammensetzung gemäß Anspruch 19, wobei Komponente (A) SiR⁹(OR¹⁰)O]_{Y}-Einheiten in einer Menge von 20-80 mol-% umfasst.

22. Wässriges Detergens umfassend:
eine Zusammensetzung gemäß Anspruch 1; und
ein Tensidsystem, wobei das Tensidsystem wenigstens ein Tensid enthält.

## Revendications

1. Composition de régulation de mousse, comprenant :
un composant (A) comprenant des motifs de la formule (R¹O)ₐ(R²O)_{b}(R³O)_{c}R⁴_{d}R⁵ₑR⁶_{f}SiO[SiR⁷R⁸O]_{X}[SiR⁹(OR¹⁰)O]_{Y}Si(R¹O)ₐ(R²O)_{b}(R³O)_{c}R⁴R⁵ₑR⁶_{f} dans laquelle
R¹ est un atome d'hydrogène ou un groupe saturé ou insaturé ayant 6 à 40 atomes de carbone,
R² est un atome d'hydrogène ou un groupe saturé ou insaturé ayant 6 à 40 atomes de carbone,
R³ est un atome d'hydrogène ou un groupe saturé ou insaturé ayant 6 à 40 atomes de carbone,
R⁴ est un groupe saturé ou insaturé ayant 1 à 12 atomes de carbone,
R⁵ est un groupe saturé ou insaturé ayant 1 à 12 atomes de carbone,
R⁶ est un groupe saturé ou insaturé ayant 1 à 12 atomes de carbone,
R⁷ est un groupe saturé ou insaturé ayant 1 à 12 atomes de carbone,
R⁸ est un groupe saturé ou insaturé ayant 1 à 12 atomes de carbone,
R⁹ est un groupe saturé ou insaturé ayant 1 à 12 atomes de carbone,
R¹⁰ est un groupe saturé ou insaturé ayant 6 à 40 atomes de carbone,
les indices a, b, c, d, e et f possédant chacun des valeurs dans la plage de 0 à 3 sous réserve que a + b + c + d + e + f = 3, X étant un entier de 0 à 1 000, et Y étant un entier de 1 à 1 000 ; et
un composant (B) comprenant une charge.

2. Composition selon la revendication 1, comprenant en outre un composant (C), le composant (C) étant une résine qui comprend des motifs M et des motifs Q, au moins un motif M étant d'une formule (R¹¹)-₃SiO_{1/2} et au moins un motif Q étant d'une formule SiO_{4/2}, R¹¹ étant un atome d'hydrogène, un groupe saturé ou insaturé ayant 1 à 40 atomes de carbone, ou un groupe saturé ou insaturé ayant 6 à 40 atomes de carbone et au moins un alkyle à liaison simple avec un atome d'oxygène.

3. Composition selon la revendication 1, comprenant en outre un composant (D) comprenant un ou plusieurs composés organiques insolubles dans l'eau.

4. Composition selon la revendication 1, la composition présentant une viscosité de 10 à 2 000 000 mPa.s à 25 °C et 1014,25 hPa et une densité de 0,9 à 1,20 g/mL, mesurées selon les procédés divulgués dans la description.

5. Composition selon la revendication 1, la charge comprenant un oxyde de silicium, un oxyde métallique ou un mélange correspondant.

6. Composition selon la revendication 1, le composant (A) étant un fluide hydrophobe qui présente une tension de surface allant de 20 à 40 millinewtons par mètre, mesurée selon le procédé divulgué dans la description.

7. Composition selon la revendication 1, le composant (A) possédant un poids moléculaire moyen en poids dans une plage allant de 2 000 à 50 000 daltons, mesuré selon le procédé divulgué dans la description.

8. Composition selon la revendication 1, le composant (A) comprenant des motifs [SiR⁷R⁸O]_{X} en une quantité de 0 à 99 % en moles.

9. Composition selon la revendication 1, le composant (A) comprenant des motifs [SiR⁹(OR¹⁰)O]_{Y} en une quantité de 99 % en moles ou moins.

10. Composition selon la revendication 1, Y étant de 10 à 1 000.

11. Composition selon la revendication 1, des atomes de carbone adjacent d'au moins l'un parmi R¹, R², R³ ou R¹⁰ étant interrompus par un ou plusieurs atomes d'oxygène ou d'azote.

12. Composition selon la revendication 2, le rapport en poids du composant (B) sur le composant (C) dans la composition étant dans une plage de 95 : 5 à 5 : 95.

13. Composition selon la revendication 2, le rapport molaire de motifs M sur Q ici étant préférablement dans la plage de 0,5 à 2,0.

14. Composition selon la revendication 2, le composant (C) comprenant en outre des motifs de la formule R¹¹SiO_{3/2} ou de la formule R¹¹₂SiO_{2/2}, les motifs R¹¹SiO_{3/2} ou les motifs R¹¹₂SiO_{2/2} étant présents en une quantité de 0,01 à 20 % en moles sur la base de la somme de tous les motifs dans le composant (C).

15. Composition selon la revendication 3, au moins l'un parmi le ou les composés organiques insolubles dans l'eau possédant un point d'ébullition supérieur à 100 °C à une pression de 900 à 1100 hPa.

16. Composition selon la revendication 8, le composant (A) comprenant des motifs [SiR⁷R⁸O]_{X} en une quantité de 10 à 99 % en moles.

17. Composition selon la revendication 8, le composant (A) comprenant des motifs [SiR⁷R⁸O]_{X} en une quantité de 0 à 5 % en moles.

18. Composition selon la revendication 16, le composant (A) comprenant des motifs [SiR⁷R⁸O]_{X} en la quantité de 30 à 80 % en moles.

19. Composition selon la revendication 9, le composant (A) comprenant des motifs [SiR⁹(OR¹⁰)O]_{Y} en une quantité de 90 % en moles ou moins.

20. Composition selon la revendication 9, le composant (A) comprenant des motifs [SiR⁹(OR¹⁰)O]_{Y} en une quantité de 95 à 99 % en moles.

21. Composition selon la revendication 19, le composant (A) comprenant des motifs (SiR⁹(OR¹⁰)O]_{Y} en la quantité de 20 à 80 % en moles.

22. Détergent aqueux comprenant :
une composition selon la revendication 1 ; et
un système de tensioactif, le système de tensioactif comprenant au moins un tensioactif.
